Europäisches Patentamt

European Patent Office

Office européen des brevets

(19)

(11) Veröffentlichungsnummer: **0 181 449**
**B1**

(12) **EUROPÄISCHE PATENTSCHRIFT**

(45) Veröffentlichungstag der Patentschrift:
11.04.90

(21) Anmeldenummer: 85110813.4

(22) Anmeldetag: 28.08.85

(51) Int. Cl.⁴: **C08L 71/12**
// (C08L71/12, 23:20)

(54) Thermoplastische Massen auf Basis von Polyphenylenethern und Polyoctenylenen sowie Verfahren zu ihrer Herstellung.

(30) Priorität: 06.10.84 DE 3436780
22.05.85 DE 3518277

(43) Veröffentlichungstag der Anmeldung:
21.05.86 Patentblatt 86/21

(45) Bekanntmachung des Hinweises auf die Patenterteilung:
11.04.90 Patentblatt 90/15

(84) Benannte Vertragsstaaten:
AT BE CH DE FR GB IT LI NL SE

(56) Entgegenhaltungen:
EP-A- 0 046 040
WO-A-80/00569
DE-A- 2 802 664
DE-A- 3 138 401

KAUTSCHUK & GUMMI, KUNSTSTOFFE, Band 34,
März 1981, Seiten 185-190, Heidelberg, DE; A.
DRÄXLER: "Trans-Polyoctenamer"
KAUTSCHUK & GUMMI, KUNSTSTOFFE, Band 36,
Dezember 1983, Seiten 1037-1043, Heidelberg, DE; A.
DRÄXLER: "Die Stellung der Polyoctenamere unter den
technisch genutzten Kautschuken"

Die Akte enthält technische Angaben, die nach dem
Eingang der Anmeldung eingereicht wurden und die
nicht in dieser Patentschrift enthalten sind.

(73) Patentinhaber: HÜLS AKTIENGESELLSCHAFT, - RSP
Patente / PB 15 - Postfach 13 20, D-4370 Marl 1(DE)

(72) Erfinder: Jadamus, Hans, Dr., Hervester Strasse 8,
D-4370 Marl(DE)
Erfinder: Ribbing, Wilfried, Dr., Heesternweg 20,
D-4270 Dorsten 12(DE)
Erfinder: Feinauer, Roland, Dr., Flämingstrasse 34,
D-4370 Marl(DE)
Erfinder: Schäfer, Wolfgang, Dr., Wiesenstrasse 71,
D-4370 Marl(DE)

## Beschreibung

Polyphenylenether, auch Polyphenylenoxide genannt, sind Polymere mit guten thermischen und elektrischen Eigenschaften. Technische Bedeutung hat insbesondere Poly(2,6-dimethyl-1,4-phenylenether) (PPE) erlangt.

Reine Polyphenylenether sind aufgrund der hohen Schmelzviskosität nur schwierig zu verarbeiten. Die aus ihnen hergestellten Formkörper weisen hohe Wärmeformbeständigkeit auf. Allerdings sind diese, insbesondere im Bereich äußerer Kerben, wenig schlagzäh.

Es sind zahlreiche Vorschläge gemacht worden, um die Verarbeitbarkeit und die Kerbschlagzähigkeit der Formmassen zu verbessern (vgl. DE-PS 1694255 entsprechend US-PS 3361851, DE-PS 1694257 entsprechend US-PS 3383435 und DE-PS 1694290 entsprechend US-PS 3379792). Doch hat sich gezeigt, daß der Zusatz von Polyolefinen, Polystyrolen bzw. Polyamiden das Eigenschaftsbild von PPEhaltigen Formmassen noch nicht in optimaler Weise beeinflußt.

Größere technische Bedeutung haben Abmischungen von Polyphenylenethern mit schlagzähen Polystyrolen erlangt (vgl. DE-PS 2119301 und DE-PS 2211005). Diese Abmischungen lassen sich gut zu Formteilen mit ausreichender Zähigkeit verarbeiten, weisen jedoch den Nachteil auf, daß mit zunehmendem Polystyrolgehalt die Wärmeformbeständigkeit abnimmt.

Es hat deshalb nicht an Versuchen gefehlt, aus reinem PPE und Kautschuken verarbeitbare Formmassen mit hoher Wärmeformbeständigkeit herzustellen (DE-PS 2107935 und DE-OS 2802664). Abgesehen davon, daß Kautschuke üblicherweise in nicht dosierbarer Ballenform vorliegen, ist aufgrund der hohen Verarbeitungsviskositäten der Kautschuke eine Einmischung in das ebenfalls hochviskose PPE mit üblichen Vorrichtungen schwierig, ergibt mit z.B. im Spritzguß üblichen Maschinen nur schwierig verarbeitbare Massen und führt außerdem zu einer Verringerung der Wärmeformbeständigkeit der daraus hergestellten Formkörper.

Der EP-OS 0016829 (=WO 80/569) ist zu entnehmen, daß neben Kautschuken, die durch Polymerisation von Butadien erhalten werden und die allgemeine Formel $-[-CH=CH-(CH_2)_2-]_x$ aufweisen, nunmehr auch Polyalkenylene der allgemeinen Struktur $-[-CH=CH-(CH_2)_n-]_x$ zur Verfügung stehen, die durch ringöffnende Polymerisation von Cycloolefinen erhältlich sind. Dabei ist n die Zahl der Ringatome minus 2. Polypentenylen sei von besonderem Interesse, da Formmassen aus Polyphenylenethern und Polypentenylen als auch solche aus Polyphenylenethern und einem mit Polypentenylen modifizierten Styrolharz verbesserte Schlagzähigkeitswerte ergäben. Abgesehen davon, daß Polypentenylen kommerziell nicht mehr erhältlich ist, ist seine Einarbeitung in Polyphenylenether mit ähnlichen Schwierigkeiten verbunden wie die Vermischung mit üblichen Kautschuken. So werden auch in allen Beispielen der EP-PS 0016829 Polystyrolharze oder Verarbeitungshilfsmittel, wie z. B. Triphenylphosphat, als zusätzliche Mischungskomponenten verwendet. Der DE-OS 3138401 ist zu entnehmen, daß die gemäß EP-OS 0016829 erhaltenen Formmassen hinsichtlich ihrer Witterungsbeständigkeit und Schlagzähigkeit noch verbesserungswürdig seien.

Gegenstand der DE-OS 3138401 sind Formmassen, die Polyphenylenether und ein schlagfest modifiziertes Styrolpolymerisat enthalten. Als Weichkomponente des Styrolpolymerisats dient ein Polyoctenylen mit einer Glasübergangstemperatur von unter -40°C.

Mit diesen Abmischungen wurde keine Verbesserung der Schlagzähigkeit gegenüber üblicherweise als Weichkomponente eingesetzten Kautschuken erreicht.

Nachdem sowohl Massen auf Basis von Polyphenylenethern und Polypentenylenen als auch solche auf Basis von Polyphenylenethern und schlagfest modifiziertem Styrolpolymerisat mit Polyoctenylen als Weichkomponente keine besonderen Vorteile hatten erkennen lassen, schienen Polyoctenylene enthaltende Polyphenylenetherabmischungen kaum geeignet, den gestiegenen Anforderungen nach hoch schlagzähen und gleichzeitig wärmeformbeständigen Formteilen gerecht zu werden, zumal mit Schwierigkeiten bei der Einarbeitung zu rechnen war.

Es wurde jetzt gefunden, daß sich thermoplastische Massen aus Gemischen von

A 100 Masseteilen Polyphenylenether,
B 2 bis 40 Masseteilen Polyoctenylen und
– bezogen auf die gesamte Formmasse –
C bis zu 50 Gew.-% Verstärkungsmitteln,
bis zu 60 Gew.-% Polyamide und/oder Polyalkylenterephthalate
bis zu 15 Gew.-% Flammschutzmitteln und
bis zu 5 Gew.-% als Zusatzstoffe Pigmente, Antistatika, Stabilisatoren, Verarbeitungshilfsmittel sowie Oligo- und Polymere, wobei Polystyrole ausgeschlossen sind, die einer Temperaturbehandlung von mindestens 250°C bei einer Verweilzeit von 20 Sekunden unterworfen wurden, durch hohe Schlagzähigkeit, hervorragende Wärmeformbeständigkeit und gute Verarbeitbarkeit auszeichnen. Selbst aus Polyphenylenethern mit einem sehr niedrigen J-Wert, wie z.B. 36, lassen sich noch Formmassen mit befriedigendem Kerbschlag herstellen (vgl. Beispiel 3.8). Gegenstand der vorliegenden Erfindung sind die thermoplastischen Massen gemäß den Ansprüchen 1 bis 5 sowie die Verfahren zu ihrer Herstellung nach den Ansprüchen 6 bis 9.

Polyoctenylene sind keine Kautschuke im engeren Sinne, da sie sich unter den Verarbeitungsbedingungen wie Thermoplaste verhalten (vgl. A. Dräxler, Kautschuk + Gummi, KUnststoffe Band 12, Seiten 1037 bis 1043, (1983). Bei Raumtemperatur verhalten sich die Polyoctenylene wie niedrigschmelzende Verarbeitungshilfsmittel und lassen keine Eignung als Schlagzähmacher erkennen.

Es erscheint überraschend, daß die Polyoctenylene offenbar dann eine schlagzähmachende Wirkung gegenüber Polyphenylenethern entfalten, wenn sie einer bestimmten Temperaturbehandlung unterworfen werden. Ihre Wirkung ist sogar noch größer als die von anderen Polyalkenylenen, wie z. B. Polypentenylen und Polydodecenylen (siehe Beispiele 3.10 sowie F und G).

Unter thermoplastischen Massen sollen im Rahmen dieser Erfindung ungeformte Mischungen angesehen werden, die sich durch thermoplastische Verarbeitung zu Formteilen oder zu Halbzeug ver arbeiten lassen. Die thermoplastischen Massen können beispielsweise als Granulat vorliegen.

Als Polyphenylenether A kommen in erster Linie Polyether auf Basis von 2,6-Dimethylphenol infrage, wobei der Ethersauerstoff der einen Einheit an den Benzolkern der benachbarten Einheit gebunden ist. Dabei sollen mindestens 50 Einheiten miteinander verknüpft sein.

Grundsätzlich kommen auch andere o,o'-Dialkylphenole infrage, deren Alkylrest vorzugsweise höchstens 6 C-Atome besitzt, sofern sichergestellt ist, daß dieser kein α-ständiges tertiäres C-ATom aufweist. Jedes der aufgeführten monomeren Phenole kann in 3-Stellung, gegebenenfalls auch in 5-Stellung, durch eine Methylgruppe substituiert sein. Selbstverständlich können auch Gemische der hier erwähnten monomeren Phenole eingesetzt werden.

Die Polyphenylenether können z.B. in Gegenwart von komplexbildenden Mitteln, wie Kupferbromid und Morpholin, aus den Phenolen hergestellt werden (vgl. DE-Os 3 224 692 UND 3 224 691). Die Viskositätszahlen, bestimmt nach DIN 53 728 in Chloroform bei 25°C, liegen im Bereich von 35 bis 80 ml/g. Bevorzugt ist das Polymere des 2,6-Dimethylphenols, der Poly-(2,6-dimethyl-1,4-phenylenether) mit einer Viskositätszahl von 40 bis 65 ml/g.

Die Polyphenylenether werden üblicherweise als Pulver oder Granulate eingesetzt.

Die Polyoctenylene B werden durch ringöffnende bzw. ringerweiternde Polymerisation von Cyclooocten hergestellt (siehe z.B. A.m Dräxler, Kautschuk + Gummi, Kunststoffe 1981, Seiten 185 bis 190). Polyoctenylene mit unterschiedlichen Anteilen an cis- und trans-Doppelbindungen sowie unterschiedlichen J-Werten und dementsprechend unterschiedlichen Molekulargewichten sind nach literaturbekannten Methoden erhältlich. Bevorzugt werden polyoctenylene mit einer Viskositätszahl von 50 bis 350 ml/g, vorzugsweise 80 bis 160 ml/g, bestimmt an einer 0,1%igen Lösung in Toluol. 55 bis 95%, vorzugsweise 75 bis 85%, seiner Doppelbindungen liegen in der trans-Form vor.

Die Formmassen enthalten, bezogen auf 100 Masseteile Polyphenylenether, 2 bis 40, vorzugsweise 4 bis 12 Masseteile Polyoctenylene.

Die erfindungsgemäßen thermoplastischen Massen können daneben Flammschutzmittel, Polyamide und/oder Polyalkylenterephthalate sowie Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel beträgt bis zu 50 Gew.-%, der der Polyamide und/oder Polyalkylenterephthalate bis zu 60 Gew.-%, der der Flammschutzmittel bis zu 15 Gew.-% und der aller übrigen Zusatzstoffe insgesamt bis zu 5 Gew.-% jeweils, bezogen auf die gesamte Formmasse.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z.B. in der Monographie von H. Vogel "Flammfestmachen von Kunststoff", Hüthig-Verlag, 1966, auf den Seiten 94 bis 102 beschrieben wird. Es kann sich dabei aber auch um halogenierte Polymere, wie z.B. halogenierte Polyphenylenether (siehe DE-OS 3 334 068) oder bromierte Oligo- bzw. Polystyrole, handeln. Die Verbindungen sollen mehr als 30 Gewichtsprozent halogen enthalten.

Im Falle der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Polyamide kommen Homo- und Copolymere infrage, die vorzugsweise ausschließlich aliphatischer Struktur sind. Insbesondere seien hier die 6-, 64-, 66-, 612-, 11- und 12-Polyamide aufgeführt. Geeignet sind aber auch gemischte aliphatisch-aromatische Copolyamide, sofern der Anteil der zugrundeliegenden aliphatischen Bausteine überwiegt (vgl. US-PS 2 071 250, 2 071 251, 2 130 523, 2 130 948, 2 241 322, 2 312 966, 2 512 606, 3 393 210; Kirk-Othmer, Encyclopedia of chemical technology, Vol. 18, John-Wiley & Sons (1982), Seiten 328 bis 435.

Das Zahlenmittel des Molekulargewichtes der Polyamide liegt über 5000, vorzugsweise über 10 000.

Als Poly(alkyleneterephthalate) werden neben Poly(propylenterephthalat) bevorzugt Poly(ethylenterephthalat) und Poly(butylenterephthalat) eingesetzt.

Bis zu 20 Mol-%, vorzugsweise 5 bis 15 Mol-%, der Terephthalsäure im Poly(alkylenterephthalat) können durch aromatische, cycloaliphatische oder aliphatische Dicarbonsäuren ersetzt werden. Beispiele geeigneter Dicarbonsäuren sind Isophthalsäure, Phthalsäure, Cyclohexan-1.4- dicarbonsäure, Adipinsäure, Sebazinsäure, Azelainsäure, Decandicarbonsäure.

Bis zu 20 Mol-%, vorzugsweise 5 bis 15 Mol-%, des Diols können durch aliphatische oder cycloaliphatische Diole wie beispielsweise Ethylenglykol, Propandiol-(1.3), Butandiol-(1.4), Hexandiol-(1.6), Neopentylglykol, 1.4-Dimethylolcyclohexan, Dodecandiol-(1.12) ersetzt sein.

Unter dem Begriff Poly(alkylenterephthalat) werden auch Blockcopolyester gerechnet. Derartige Produkte werden z. B. in Chimia 28 (9), Seiten 544 bis 552 (1974) und in Rubber Chemistry and Technology 50, Seiten 688 bis 703 (1977) beschrieben. Diese Blockcopolyester enthalten neben den obengenannten aromatischen Dicarbonsäuren und Diolen ein Poly(oxyalkylen)diol mit einem Molgewicht im Bereich von etwa 600 bis 2 500. Bevorzugte Poly(oxyalkylen)diole sind Poly(oxyethylen)diol, Poly-(oxypropylen)diol und Poly(oxytetramethylen)diol. Der Anteil der Poly(oxyalkylen)diole liegt im Bereich von 4 bis 40 Gew.-%, vorzugsweise von 10 bis 35 Gew.-% (bezogen auf den genannten Blockcopolyester).

Neben Homo- und Copolyestern können auch Polyestergemische eingesetzt werden, wobei die Mischungsverhältnisse unkritisch sind.

Bezüglich weiterer Einzelheiten sei auf die DE-OS 3401345 verwiesen.

Als Verstärkungsmittel eignen sich insbesondere Glas- und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Ein wesentliches Merkmal der vorliegenden Erfindung sind die 3 Verfahren, nach denen die Formmassen auf Basis von Polyphenylenethern und Polyoctenylenen vorzugsweise hergestellt werden.

I Schmelzen und Mischen von Polyphenylenethern und Polyoctenylenen

Kennzeichnend für dieses Verfahren ist die Vermischung der beiden Komponenten im geschmolzenen Zustand. Man schmilzt den Polyphenylenether oder das Polyoctenylen auf und vermischt die erhaltene Schmelze des einen Polymeren mit dem jeweils anderen Polymeren. Eine andere Möglichkeit besteht darin, beide Polymere gemeinsam aufzuschmelzen und zu vermischen. Die Mischung wird hierbei einer Temperaturbehandlung von mindestens 250 °C bei einer Verweilzeit von mindestens 20 Sekunden unterworfen.

Die Temperatur und die Dauer des Schmelzens und Vermischens sind wichtig im Hinblick auf eine optimale Schlagzähigkeitsverbesserung. Vorzugsweise werden Schmelztemperaturen von 250 bis 350°C, insbesondere von 250 bis 300°C, und Verweilzeiten von 0,3 bis 10 Minuten, insbesondere 0,5 bis 3 Minuten, angewendet.

Für das Schmelzen und Vermischen eignen sich übliche Geräte zur Behandlung von hochviskosen Schmelzen, sowohl im absatzweisen als auch im kontinuierlichen Betrieb. Besonders geeignet sind Doppelschneckenkneter und Kokneter.

II Herstellung einer gemeinsamen Lösung von Polyphenylenethern und Polyoctenylenen und Entfernung des Lösemittels

Die gemeinsame Lösung kann dadurch hergestellt werden, daß man jedes der beiden Polymeren in einem geeigneten, möglicherweise unterschiedlichen Lösemittel löst und diese Lösungen vereinigt. Man kann aber auch ein Lösemittel suchen, in dem beide Polymere aufgelöst werden. Geeignete Lösemittel in diesem Sinne sind Lösemittel, in denen sich die Polymeren weitgehend vollständig auflösen; insbesondere kommen Aromaten, vorzugsweise Toluol, infrage.

Das Lösemittel kann entfernt werden, indem man entweder das Lösemittel abdampft oder der Lösung einen Nichlöser, wie z. B. Methanol, zusetzt, das Polymerengemisch ausfällt und anschließend trocknet.

Die Konzentration des Polymerengemisches in dem Lösemittel bzw. den Lösemittelgemischen liegt üblicherweise zwischen 5 und 70 Gewichtsprozent, vorzugsweise bei 10 bis 20 Gewichtsprozent.

Anschließend wird das Polymerengemisch bei erhöhten Temperaturen mit den Zusatzstoffen verarbeitet. Die Temperatur liegt über 250°C bei einer Verweilzeit von mindestens 20 Sekunden.

III Schmelzen und Mischen einer nach Verfahren II hergestellten Vorformmasse mit Polyoctenylen entsprechend Verfahren I

In vielen Fällen ist es vorteilhaft, zunächst eine Vorformmasse nach Verfahren II herzustellen, diese aufzuschmelzen und mit weiterem Polyoctenylen und den Zusatzstoffen zu vereinigen.

Die Zusatzstoffe können den Polymeren in den Verfahren I und III oder in einer getrennten Verfahrensstufe über übliche Doppelschneckenextruder oder Kokneter zugesetzt werden.

Die erfindungsgemäßen thermoplastischen Formmassen lassen sich mit den für die Thermoplastverarbeitung üblichen Verfahren, wie z. B. Spritzgießen und Extrusion, zu Formkörpern verarbeiten. Beispielsweise kann es sich um Rohre Platten und sonstige technische Artikel handeln, die vorzugsweise im Automobil- und Elektrosektor oder als Feinwerkzeug Verwendung finden.

Herstellung und Herkunft der Komponenten

1. Polyphenylenether bzw. Polyphenylenether-Vorformmassen

Die Polyphenylenether erhielt man durch oxidative Kupplung von 2,6-Dimethylphenol, Abstoppung der Reaktion bei dem gewünschten J-Wert und anschließende Reaktionsextraktion gemäß DE-OS 3313864 und 3332377.

1.1. Entsprechend der allgemeinen Arbeitsvorschrift wurde ein Polyphenylenether mit einem J-Wert von 52 ml/g hergestellt. Das Lösemittel wurde durch Abdampfen entfernt und die Schmelze über einen Entgasungsextruder extrudiert und anschließend granuliert.

1.2 Analog wie in Beispiel 1.1 wurde ein Polyphenylenether mit einem J-Wert von 69 ml/g hergestellt und anschließend extrudiert und granuliert.

1.3 Analog wie in Beispiel 1.1 wurde ein Polyphenylenether mit einem J-Wert von 72 ml/g hergestellt und anschließend extrudiert und granuliert.

1.4 Entsprechend der allgemeinen Arbeitsvorschrift wurde die organische Lösung eines Polyphenylenethers mit einem J- Wert von 55 ml/g hergestellt. Das Polymere wurde aus der organischen Lösung mit Methanol gefällt und zu einem trokkenen Pulver aufgearbeitet.

1.5 Entsprechend der allgemeinen Arbeitsanweisung wurde eine 10%ige organische Lösung eines Polyphenylenethers mit einem J-Wert von 36 ml/g hergestellt.

1.6 Entsprechend der allgemeinen Arbeitsanweisung wurde eine 10 %ige organische Lösung eines Polyphenylenethers mit einem J-Wert von 48 ml/g hergestellt.

1.7 Entsprechende der allgemeinen Arbeitsanweisung wurde eine 10 %ige organische Lösung eines Polyphenylenethers mit einem J-Wert von 52 ml/g hergestellt. Diese Lösung wurde nach Verfahren II (siehe unten) mit Polyoctenylen vermischt, wobei auf 100 Masseteile Polyphenylenether 10 Masseteile Polyoctenylen kamen.

1.8 Entsprechend der allgemeinen Arbeitsanweisung wurde eine 10 %ige organische Lösung eines Polyphenylenethers mit einem J-Wert von 56 ml/g hergestellt. Diese Lösung wurde nach Verfahren III (siehe unten) mit dem jeweiligen Polyalkenylen vermischt, wobei auf 90 Masseteile Polyphenylenether 10 Masseteile des jeweiligen Polyalkenylens kamen. Anschließend fällte man das Polymerengemisch durch Zusatz von Methanol aus und arbeitete es zu einem trockenen Pulver auf.

2. Polylakenylene Als Polyoctenylene wurden folgende Typen eingesetzt:

2.1 Polyoctenylen mit einem J-Wert von 120 ml/g und einem trans-Gehalt von 80 %. Ein solches Produkt ist unter dem Namen VESTENAMER$^R$ 8012 im Handel erhältlich (Hersteller: Chemische Werke Hüls AG, D-4370 Marl 1). Weitere Kenndaten dieses Produkts sind der Zeitschrift "Kautschuk, Gummi, Kunststoffe" 1981, Seiten 185 bis 190, sowie dem hüls-Merkblatt Nr. 2247 "VESTENAMER® 8012" zu entnehmen.

2.2 Polyoctenylen mit einem J-Wert von 70 ml/g und einem trans-Gehalt von 76 %.

2.3 Es wurde ein Polypentenylen mit einem J-Wert von 154 ml/g und einem trans-Gehalt von 89 % eingesetzt.

2.4 Es wurde ein Polydodecenylen mit einem J-Wert von 90 ml/g einem trans-Gehalt von 81 % eingesetzt. Wegen der geringen Löslichkeit des Produkts in Toluol war es erforderlich, die J-Wert-Bestimmung in Dekalin bei 135°C durchzuführen.

Die Polyalkenylene können nach K.J. Ivin "Olefin Metathesis", Academic Press, 1983, und den dort angegebenen Originalliteraturstellen hergestellt werden.

Für die Fertigung der Werkstoffe benutzte man einen ZSK 30-Doppelschneckenkneter der Fa. Werner und Pfleiderer mit Förder-, Knet- und Entgasungszonen.

Bei der Formmassen, die gemäß Verfahren I hergestellt wurden, wurde ein Mischung von PPE und Polyoctenylenen aufgeschmolzen. Die Zylinder- und Verarbeitungstemperatur sowie die Verweilzeit sind Tabelle 1 zu entnehmen.

Bei den Formmassen, die gemäß den Beispielen 3.8 und 3.9 hergestellt wurden, wurde das Polyalkenylen in der toluolischen Lösung des Polyphenylenethers gelöst. Die Lösung wurde auf 70 % aufkonzentriert. Das noch verbliebene Lösemittel wurde mittels eines Entgasungsextruders entfernt.

Für die Bestimmung der Kerbschlagzähigkeit ($a_k$) nach DIN 53 453 verarbeitete man das Granulat auf einer Spitzgußmaschine bei einer Zylindertemperatur von 240 bis 260°C und einer Werkzeugtemperatur von 90°C zu Normkleinstäben.

Die Vicat-Erweichungstemperatur nach DIN 53 460 bestimmte man an 4 mm dicken Preßplatten, die man bei 250°C hergestellt hatte.

Tabelle 1

| Bsp. | PPE | Poly-alkenylen | Massenteile | | | Zylindertem-peratur (°C) | Verweilzeit (sek) | Verarbeitungs-temperatur (°C) | Kerbschlag-zähigkeit (kJ/m²) | Vicat-Temperatur (°C) | | Ver-fahren |
| | gemäß Beispiel | | PPE | Poly-alkenylen | TPP[2] | | | | | A | B | |
|---|---|---|---|---|---|---|---|---|---|---|---|---|
| A | 1.1 | – | 100 | – | – | – | – | 340 | 2,4 | 208 | 204 | I |
| 3.1 | 1.1 | 2.1 | 100 | 10 | – | 260 | 75 | 260 | 18 | 205 | 194 | I |
| 3.2 | 1.1 | 2.2 | 100 | 10 | | 260 | 75 | 260 | 11 | 203 | 193 | I |
| B | 1.2 | – | 100 | – | – | 300 | 75 | 320 | 4,4 | 195 | 189 | I |
| 3.3 | 1.2 | 2.1 | 100 | 10 | – | 260 | 75 | 310 | 30 | 195 | 187 | I |
| C | 1.2 | – | 100 | – | 10 | 260 | 75 | 310 | 4,0 | 149 | 145 | I |
| 3.4 | 1.2 | 2.1 | 100 | 10 | 10 | 260 | 75 | 310 | 18 | 159 | 149 | I |
| D | 1.3 | – | 100 | – | – | – | – | 340 | 4,0 | 203 | 200 | I |
| 3.5 | 1.3 | 2.1 | 100 | 10 | – | 300 | 300 | 260 | 11 | 201 | 193 | I |
| 3.6 | 1.3 | 2.1 | 100 | 20 | – | 300 | 75 | 260 | 21 | 199 | 175 | I |
| E | 1.4 | – | 100 | – | [1] | 260 | 75 | 280 | 7,0 | 205 | 195 | I |
| 3.7 | 1.5 | 2.1 | 100 | 10 | – | – | – | 260 | 10 | 202 | 193 | II |
| 3.8 | 1.6 | 2.1 | 100 | 10 | – | – | – | 280 | 17 | 202 | 194 | II |
| 3.9 | 1.7 | 2.1 | 100 | 20 | – | 260 | 75 | 260 | 11 | 198 | 179 | III |
| 3.10 | 1.8 | 2.1 | 90 | 10 | [1] [3] | 260 | 75 | 280 | 26,3 | 200 | 190 | III |
| F | 1.8 | 2.3 | 90 | 10 | [1] [3] | 260 | 75 | 280 | 25,0 | 199 | 189 | III |
| G | 1.8 | 2.4 | 90 | 10 | [1] [3] | 260 | 75 | 280 | 19,4 | 206 | 195 | III |

[1] Beim Compoundieren wurde dem Polyphenylenether bzw. dem Gemisch aus Polyphenylenether und Polyalkenylen 0,5% Didecylphenylphosphit sowie 0,5% Octadecyl-3-(3,5-di-tert.-butyl-4-hydroxyphenyl)-propionat zugesetzt.

[2] Triphenylphosphat

[3] Beim Compoundieren wurde dem Gemisch aus Polyphenylenether und Polyalkenylen zusätzlich 1,5% eines oxidierten Polyethylenwachses mit einem Molekulargewicht 1500 zugesetzt. Ein solches Produkt ist in bekannter Weise durch Oxidation von Polyethylen erhältlich. Es ist unter dem Namen VESTOWAX® AO 1539 im Handel erhältlich (Hersteller: Chemische Werke Hüls AG, D–4370 Marl 1).

EP 0 181 449 B1

**Patentansprüche**

1. Thermoplastische Formmassen die erhältlich sind, indem man eine Mischung aus
A 100 Masseteilen Polyphenylenethern,
B 2 bis 40 Masseteilen Polyoctenylen und
– bezogen auf die gesamte Formmasse –
C bis zu 50 Gew.-% Verstärkungsmittel,
bis zu 60 Gew.-% Polyamide und/oder Polyalkylenterephthalate
bis zu 15 Gew.-% Flammschutzmittel und
bis zu 5 Gew.-% als Zusatzstoffe Pigmente, Antistatika, Stabilisatoren, Verarbeitungshilfsmittel sowie Oligo- und Polymere, wobei Polystyrole ausgeschlossen sind,
einer Temperaturbehandlung von mindestens 250°C bei einer Verweilzeit von mindestens 20 Sekunden unterwirft.

2. Thermoplastische Formmassen nach Anspruch 1, dadurch gekennzeichnet, daß sie 4 bis 12 Masseteile Polyoctenylene enthalten.

3. Thermoplastische Formmassen nach den Ansprüchen 1 und 2, dadurch gekennzeichnet, daß als Polyphenylenether ein Polymeres des 2,6-Dimethylphenols mit einer Viskositätszahl von 40 bis 65 ml/g eingesetzt wird.

4. Thermoplastische Massen gemäß den Ansprüchen 1 bis 3, dadurch gekennzeichnet, daß das Polyoctenylen eine Viskositätszahl von 50 bis 350 ml/g, vorzugsweise 80 bis 160 ml/g, bestimmt an einer 0,1%igen Lösung in Toluol, aufweist.

5. Thermoplastische Massen gemäß den Ansprüchen 1 bis 4, dadurch gekennzeichnet, daß 55 bis 95, vorzugsweise 75 bis 85% der Doppelbindungen des Polyoctenylens trans-konfiguriert sind.

6. Verfahren zur Herstellung der thermoplastischen Massen nach den Ansprüchen 1 bis 5, dadurch gekennzeichnet, daß man den Polyphenylenether und/oder das Polyoctenylen und gegebenenfalls die Zusatzstoffe aufschmilzt und die beiden Komponenten vermischt, wobei man die Mischung einer Temperaturbehandlung von mindestens 250°C bei einer Verweilzeit von mindestens 20 Sekunden unterwirft.

7. Verfahren nach Anspruch 6, dadurch gekennzeichnet, daß man eine Schmelztemperatur von 250 bis 350°C, vorzugsweise 250 bis 300°C, und Verweilzeiten von 0,3 bis 10 Minuten, vorzugsweise 0,5 bis 3 Minuten, einstellt.

8. Verfahren zur Herstellung der thermoplastischen Formmassen nach den Ansprüchen 1 bis 5, dadurch gekennzeichnet, daß man den Polyphenylenether und/oder das Polyoctenylen in einem für beide Polymere geeigneten Lösemittel löst und die thermoplastischen Massen durch Abdampfen des Lösemittels oder Ausfällen mit einem Nichtlöser isoliert, und man die Mischung einer Temperaturbehandlung von mindestens 250°C bei einer Verweilzeit von mindestens 20 Sekunden unterwirft.

9. Verfahren zur Herstellung von thermoplastischen Massen entsprechend Anspruch 8, dadurch gekennzeichnet, daß man die nach Mischung und Entfernung des Lösemittels erhaltene Vorformmasse mit weiterem Polyoctenylen mischt, indem man die Vorformmasse und/oder das Polyoctenylen und gegebenenfalls die weiteren Zusatzstoffe aufschmilzt und die Komponenten vermischt.

**Claims**

1. Thermoplastic moulding compositions which are obtainable by subjecting a mixture of
A 100 parts by weight of polyphenylene ethers,
B 2 to 40 parts by weight of polyoctenylene and – relative to the whole moulding composition –
C up to 50% by weight of reinforcing agents, up to 60% by weight of polyamides and/or polyalkylene terephthalates up to 15% by weight of flame retardants and up to 5% by weight as additives of pigments, antistatic agents, stabilizers, processing aids, as well as oligomers and polymers, polystyrenes being excluded,
to a temperature treatment of at least 250°C with a residence time of at least 20 seconds.

2. Thermoplastic moulding compositions according to claim 1, characterized in that they contain 4 to 12 parts by weight of polyoctenylenes.

3. Thermoplastic moulding compositions according to either of claims 1 and 2, characterized in that a polymer of 2, 6-dimethyl-phenol with a viscosity number of 40 to 65 ml/g is used as polyphenylene ether.

4. Thermoplastic compositions according to any of claims 1 to 3; characterized in that the polyoctenylene has a viscosity number of 50 to 350 ml/g, preferably 80 to 160 ml/g, determined on a 0.1% strength solution in toluene.

5. Thermoplastic compositions according to any of claims 1 to 4, characterized in that 55 to 95, preferably 75 to 85, % of the double bonds of the polyoctenylene are in the trans- configuration.

6. A process for preparing the thermoplastic compositions according to any of claims 1 to 5, characterized in that the polyphenylene ether and/or the polyoctenylene and, if desired, the additives, are melted and the two components are mixed, the mixture being subjected to a heat treatment of at least 250°C with a residence time of at least 20 seconds.

7. A process according to claim 6, characterized in that a melt temperature of 250 to 350°C, preferably 250 to 300°C, and residence times of 0.3 to 10 minutes, preferably 0.5 to 3 minutes, are set.

8. A process for preparing the thermoplastic moulding compositions according to any of claims 1 to 5, characterized in that the polyphenylene ether and/or the polyoctenylene are dissolved in a solvent which is suitable for both polymers, and the thermoplastic compositions are isolated by evaporating off the solvent or by precipitation with a non-solvent, and the mixture is subjected to a temperature treatment of at least 250°C with a residence time of at least 20 seconds.

9. A process for preparing thermoplastic compositions according to claim 8, characterized in that the preliminary moulding composition obtained after mixing and removal of the solvent is mixed with further polyoctenylene by melting the preliminary moulding composition and/or the polyoctenylene and, if desired, the other additives, and mixing the components.

## Revendications

1. Masses à mouler thermoplastiques qui peuvent être obtenues en soumettant un mélange constitué de
A) 100 parties en masse d'éthers polyphényléniques,
B) 2 à 40 parties en masse de polyocténylène et
– relativement à la totalité de la masse à mouler –
C) jusqu'à 50 % en poids de renforçateurs, jusqu'à 60 % en poids de polyamides et/ou de téréphtalates de polyalkylène
jusqu'à 15 % en poids d'ignifugeants, et
jusqu'à 5 % en poids de pigments, d'agents anti-statiques, de stabilisants, d'adjuvants de façonnage ainsi que des oligomères et des polymères comme additifs, les polystyrènes étant exclus,
à un traitement à chaud à une température d'au moins 250°C, avec un temps de séjour d'au moins 20 secondes.

2. Masses à mouler thermoplastiques selon la revendication 1, caractérisées par le fait qu'elles renferment de 4 à 12 parties en masse de polyocténylènes.

3. Masses à mouler thermoplastiques selon les revendications 1 et 2, caractérisées par le fait que l'on utilise, comme éther polyphénylénique, un polymère du 2,6-diméthylphénol possédant un indice de viscosité de 40 à 65 ml/g.

4. Masses à mouler thermoplastiques selon les revendications 1 à 3, caractérisées par le fait que le polyocténylène présente un indice de viscosité de 50 à 350 ml/g, de préférence de 80 à 160 ml/g, déterminé sur une solution à 0, 1 % dans du toluène.

5. Masses à mouler thermoplastiques selon les revendications 1 à 4, caractérisées par le fait que de 55 à 95 %, de préférence de 75 à 85 % des liaisons doubles du polyocténylène ont la configuration trans.

6. Procédé pour la préparation des masses thermoplastiques selon les revendications 1 à 5, caractérisé par le fait que l'on fait fondre l'éther polyphénylénique et/ou le polyocténylène et éventuellement les additifs, et que l'on mélange les deux composants, le mélange étant soumis à un traitement à chaud à une température d'au moins 250°C, avec un temps de séjour d'au moins 20 secondes.

7. Procédé selon la revendication 6, caractérisé par le fait que l'on établit une température de fusion de 250 à 350°C, de préférence de 250 à 300°C, et des temps de séjour de 0,3 à 10 minutes, de préférence de 0,5 à 3 minutes.

8. Procédé pour la préparation des masses à mouler selon les revendications 1 à 5, caractérisé par le fait que l'on dissout l'éther polyphénylénique et/ou le polyocténylène dans un solvant approprié pour les deux polymères et que l'on isole les masses thermoplastiques par évaporation du solvant ou précipitation avec un non-solvant, et que l'on soumet le mélange à un traitement à chaud à une température d'au moins 250°C, avec un temps de séjour d'au moins 20 secondes.

9. Procédé pour la préparation de masses thermoplastiques selon la revendication 8, caractérisé par le fait que l'on mélange la masse de prémoulage, obtenue après mélange et élimination du solvant, avec davantage de polyocténylène, en faisant fondre la masse de prémoulage et/ou le polyocténylène et éventuellement les autres additifs et en mélangeant les composants.